# EUROPEAN PATENT SPECIFICATION

(11) **EP 4 397 507 B1**
(45) Date of publication and mention of the grant of the patent: **04.02.2026**
(21) Application number: 22862851.7
(22) Date of filing: 29.06.2022
(51) Int. Cl.: B60C 23/04, B60C 19/12, B29D 30/06

(54) **FOREIGN MATTER PUNCTURE REMINDING METHOD FOR SELF-REPAIRING TIRE, AND RELATED APPARATUS**
VERFAHREN ZUR FREMDSTOFFPUNKTIONSERINNERUNG FÜR SELBSTREPARIERENDEN REIFEN UND ZUGEHÖRIGE VORRICHTUNG
PROCÉDÉ DE RAPPEL DE CREVAISON PAR UN CORPS ÉTRANGER POUR UN PNEU AUTORÉPARABLE, ET APPAREIL ASSOCIÉ

(30) Priority: 30.08.2021 CN 202111004564
(43) Date of publication of application: 10.07.2024
(73) Proprietor: Great Wall Motor Company Limited, Baoding, Hebei 071000 (CN)
(72) Inventor: MENG, Xiangyu, Baoding, Hebei 071000 (CN); XU, Guangjie, Baoding, Hebei 071000 (CN); ZHOU, Dexiang, Baoding, Hebei 071000 (CN)
(74) Representative: Klunker IP Patentanwälte PartG mbB
(86) International application number: PCT/CN2022/102276
(87) International publication number: WO 2023/029710

(56) References cited:
- CN-A- 103 287 225
- CN-A- 114 643 816
- DE-A1- 102008 053 506
- DE-A1- 102017 218 171
- US-A1- 2005 045 259
- US-A1- 2006 220 814
- US-A1- 2020 130 434
- US-A1- 2020 369 098
- US-B2- 7 559 235

## Description

### TECHNICAL FIELD

The present invention relates to the technical field of vehicles, and particularly relates to a method for alerting foreign-matter puncturing for a self-repairing tyre and a corresponding apparatus, and a vehicle comprising the apparatus.

### BACKGROUND

Self-repairing tyres (also called "self-healing tyres" of "sealant tyres"), due to the convenient self-repairing technique, have gradually become popular, but many problems of them emerge in usage. Currently, most of vehicles are equipped with self-repairing tyres. If a self-repairing tyre is punctured by a small foreign matter such as a nail and a glass cullet in travelling, the self-repairing tyre can ensure that the punctured position maintains the sealing state, and does not leak air even after the foreign matter such as a nail has been removed, whereby the travelling can continue, and the driver is not required to immediately park to the roadside to replace the tyre. However, in this case, the state of dynamic balance of the tyre is destroyed, and if the driver does not treat the foreign matter in time, that results in increasing in the tyre noise and premature wearing of the hub bearing. The increasing in the tyre noise deteriorates the travelling experience of the driver and the passengers, and the wearing of the hub bearing increases the cost on the repairing and maintenance of the vehicle. What is most important is that the destroying of the state of dynamic balance of the tyre jeopardizes the safety of travelling.
DE 10 2017 218171 A1, US 2020/130434 A1, DE 10 2008 053506 A1 disclose self-repair tyres using sensors to detect a chemical substance expanded in the tyre after puncturing.
US 7 559 235 B2, after a tyre puncture, pressure rates are monitored while a sealant is pumped inside the tyre, but the tyre is not a self-repair tyre and in between the pressure measurements an inflation of the tyre take place.

Currently, all of the methods for alerting foreign-matter puncturing are used for common tyres, and there is no method for alerting foreign-matter puncturing for self-repairing tyres, which causes that the driver neglects the foreign-matter puncturing of the self-repairing tyre, which affects the safety of travelling.

### SUMMARY

### TECHNICAL PROBLEM

It is an object of the present invention to provide a method for alerting foreign-matter puncturing for a self-repairing tyre, a corresponding apparatus, and a vehicle comprising the apparatus, to solve the problem of lacking a method for alerting foreign-matter puncturing for self-repairing tyres, which causes that the driver neglects the foreign-matter puncturing of the self-repairing tyre, which affects the safety of travelling.

### TECHNICAL SOLUTIONS

The object is achieved by the features of the independent claim 1 regarding the method for alerting foreign-matter puncturing for a self-repairing tyre, of independent claim 8 regarding the apparatus method for alerting foreign-matter puncturing for a self-repairing tyre, and of independent claim 13 regarding the vehicle. Further embodiments are defined in the respective dependent claims.

### ADVANTAGEOUS EFFECTS

The present invention provides a method for alerting foreign-matter puncturing for a self-repairing tyre and a corresponding apparatus. By acquiring the tyre-pressure comparison results of the tyres, and if the tyre-pressure comparison result of a certain tyre is that the tyre pressure within the current period is less than the tyre pressure within the preceding one period and the tyre-pressure change rate within the current period satisfies a predetermined rule, wherein the predetermined rule includes at least one of that the tyre-pressure change rate within the current period is less than the tyre-pressure change rate within the preceding one period and that the tyre-pressure change rate within the current period is less than a preset tyre-pressure-change-rate threshold, determining that the tyre has a risk of foreign-matter puncturing, a tyre having a risk of foreign-matter puncturing can be identified. If it is determined that the vehicle has a tyre having a risk of foreign-matter puncturing, then an alarming message is outputted, to alert the driver in time that the vehicle has a tyre having a risk of foreign-matter puncturing, which is required to be treated in time, to prevent affecting the safety of travelling.

### BRIEF DESCRIPTION OF THE DRAWINGS

In order to more clearly illustrate the technical solutions of the present invention, the figures to describe the embodiments will be briefly described below.
FIG. 1 is a flow chart of the implementation of a method for alerting foreign-matter puncturing for a self-repairing tyre;
FIG. 2 is a schematic structural diagram of an apparatus for alerting foreign-matter puncturing for a self-repairing tyre; and
FIG. 3 is a schematic diagram of an electronic device.

### DETAILED DESCRIPTION

In the following description, in order for description rather than limitation, particular details such as particular system structures and techniques are provided, to facilitate to thoroughly comprehend the present invention. However, the detailed description on well-known systems, devices, circuits and methods is omitted, to prevent affecting the description on the present invention by unnecessary details. In the present disclosure, "and/or" includes any and all combinations of one or more relevant listed items.

In order to make the objects, the technical solutions and the advantages of the present invention clearer, the present invention will be described below with reference to the drawings and the particular embodiments.

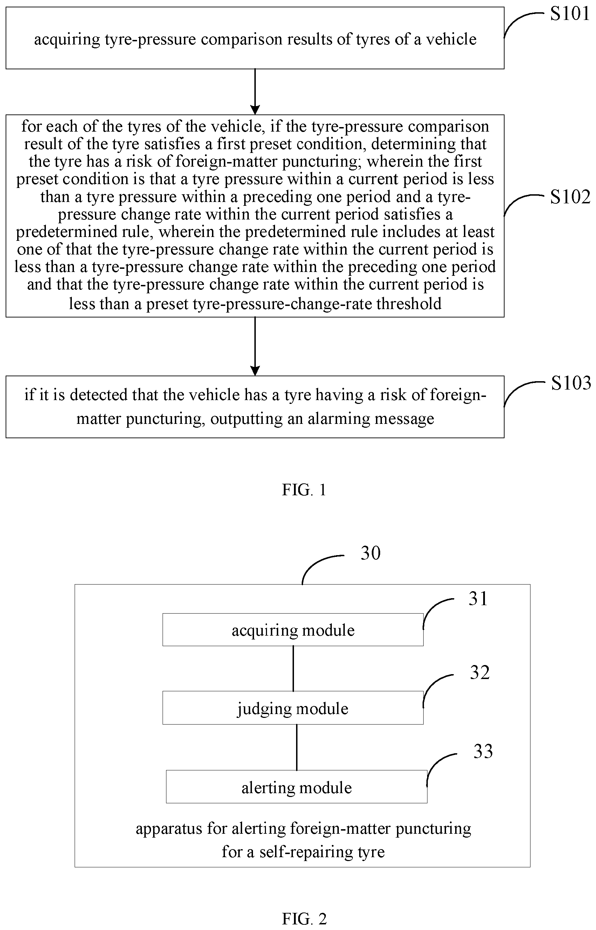

Referring to FIG. 1, FIG. 1 shows a flow chart of the implementation of a method for alerting foreign-matter puncturing for a self-repairing tyre according to an embodiment of the present invention. The subject of the implementation of the method may be an electronic device, and the electronic device may be a vehicle-body domain controller or a central controller of a vehicle. The method particularly comprises the following steps:

S101: acquiring tyre-pressure comparison results of tyres of a vehicle.

Although a self-repairing tyre can maintain the sealing state when it has been punctured by a foreign matter, at the moment of the foreign-matter puncturing, it has an instantaneous decreasing of the tyre pressure. However, in normal travelling, the variation of the tyre pressure of a self-repairing tyre is usually gentle, and it might slowly increase or slowly decrease, i.e., regularly varying, but does not instantaneously decrease. Therefore, in the present embodiment, it can be determined by monitoring the tyre pressures of the tyres whether there is a risk of foreign-matter puncturing.

In the present embodiment, firstly, the tyre-pressure comparison results of the tyres of the vehicle are acquired. The tyre-pressure comparison results of the tyres may contain the results of the comparison between the tyre-pressure information within the current period and the tyre-pressure information within the preceding one period corresponding to the tyres individually and/or the results of the comparison between the tyre-pressure information within the current period and a preset tyre-pressure-information threshold corresponding to the tyres individually. The tyre-pressure information may contain data such as the tyre pressure, the change rate of the tyre pressure, and/or the change amount of the tyre pressure. The period may be the detection period of the tyre pressure, wherein within one period, the tyre pressure of the tyre is detected one time. The period is usually a small duration, and may, for example, be 100ms.

In some embodiments, step S101 may include:

receiving the tyre-pressure comparison results of the correspond tyres sent by tyre-pressure controllers of the tyres, wherein each of the tyre-pressure comparison results is obtained by, by the corresponding instance of the tyre-pressure controllers, obtaining the tyre pressures within periods of the corresponding instance of the tyres by using a corresponding tyre-pressure sensor, and pre-processing the tyre pressures within the periods of the corresponding tyre.

In the present embodiment, each of the tyres has a corresponding tyre-pressure controller. Inside each of the tyres there is a corresponding tyre-pressure sensor to monitor in real time the tyre pressure of the tyre, and the tyre pressure of the tyre may be sent from the interior of the tyre to the corresponding tyre-pressure controller by using a wireless transmitter. The tyre pressure of the tyre refers to the intensity of pressure of the air inside the tyre.

The tyre-pressure controller may receive the real-time tyre pressures (i.e., the tyre pressures obtained by the detection within the periods) of the corresponding tyre sent by the corresponding tyre-pressure sensor, and pre-process the real-time tyre pressures of the tyre to obtain the tyre-pressure comparison result of the tyre. The pre-processing may comprise, according to the real-time tyre pressures of the tyre, calculating the tyre-pressure change rates within the periods, and comparing the tyre pressures and the tyre-pressure change rates of the consecutive periods (which may particularly comprise comparing the tyre pressure within the current period and the tyre pressure within the preceding one period, comparing the tyre-pressure change rate within the current period and the tyre-pressure change rate within the preceding one period, or comparing the tyre-pressure change rate within the current period and a preset tyre-pressure-change-rate threshold). The tyre-pressure controller, after obtains the tyre-pressure comparison result of the corresponding tyre, sends it to the electronic device.

In an alternative implementation, the electronic device may receive the tyre pressures within the periods of the corresponding tyres sent by the corresponding tyre-pressure sensors, or the electronic device, by using the corresponding tyre-pressure controllers, receive the tyre pressures within the periods of the corresponding tyres sent by the corresponding tyre-pressure sensors. The electronic device pre-processes the tyre pressures within the periods of the tyres to obtain the tyre-pressure comparison results of the tyres.

S102: for each of the tyres of the vehicle, if the tyre-pressure comparison result of the tyre satisfies a first preset condition, determining that the tyre has a risk of foreign-matter puncturing;

wherein the first preset condition is that a tyre pressure within a current period is less than a tyre pressure within a preceding one period and a tyre-pressure change rate within the current period satisfies a predetermined rule, wherein the predetermined rule includes at least one of that the tyre-pressure change rate within the current period is less than a tyre-pressure change rate within the preceding one period and that the tyre-pressure change rate within the current period is less than a preset tyre-pressure-change-rate threshold, and the tyre-pressure change rate within the current period = (the tyre pressure within the current period - the tyre pressure within the preceding one period)/a duration of one period.

In the present embodiment, it is individually determined whether the tyre-pressure comparison result of each of the self-repairing tyres of the vehicle satisfies the first preset condition. If the tyre-pressure comparison result of a certain self-repairing tyre satisfies the first preset condition, then it is determined that the tyre might have been punctured by a foreign matter, and have a risk of foreign-matter puncturing. If none of the tyre-pressure comparison results of the self-repairing tyres satisfies the first preset condition, then it is determined that none of the self-repairing tyres of the vehicle has a risk of foreign-matter puncturing.

In the present embodiment, the first preset condition is that the tyre pressure within the current period is less than the tyre pressure within the preceding one period and the tyre-pressure change rate within the current period satisfies a predetermined rule, wherein the predetermined rule comprises at least one of a first rule and a second rule, wherein the first rule is that the tyre-pressure change rate within the current period is less than the tyre-pressure change rate within the preceding one period, and the second rule is that the tyre-pressure change rate within the current period is less than the preset tyre-pressure-change-rate threshold. In other words, if the tyre pressure of a certain tyre is decreasing and the amplitude of the decreasing of the tyre pressure increases or is relatively large, then it is determined that the tyre has a risk of foreign-matter puncturing. It can be understood that the tyre-pressure change rate within the current period is a negative value.

Assuming that the current period is the n-th period, then the tyre-pressure change rate within the current period = (the tyre pressure within the n-th period - the tyre pressure within the (n-1)-th period)/the duration of one period, and the tyre-pressure change rate within the preceding one period = (the tyre pressure within the (n-1)-th period - the tyre pressure within the (n-2)-th period)/the duration of one period.

The preset tyre-pressure-change-rate threshold may be obtained by calibration, which is not limited particularly herein.

In an alternative implementation, the change rate of the tyre pressure may be replaced by another parameter that has the same effect. For example, in the process of the periodic detection, the change amount of the tyre pressure may be used to represent the change rate of the tyre pressure. In other words, the first preset condition is that the tyre pressure within the current period is less than the tyre pressure within the preceding one period and the tyre-pressure change amount within the current period is less than the tyre-pressure change amount within the preceding one period or the tyre-pressure change amount within the current period is less than a preset tyre-pressure-change-amount threshold, and the tyre-pressure change amount within the current period = the tyre pressure within the current period - the tyre pressure within the preceding one period. It can be understood that the tyre-pressure change amount within the current period is a negative value.

The preset tyre-pressure-change-amount threshold may be obtained by calibration, which is not limited particularly herein.

In some embodiments, after it is determined that the tyre-pressure change rate within the current period is less than the tyre-pressure change rate within the preceding one period, the method for alerting foreign-matter puncturing for a self-repairing tyre further comprises:

determining whether a difference obtained by subtracting the tyre-pressure change rate within the current period from the tyre-pressure change rate within the preceding one period is greater than a preset change-rate difference, and if yes, determining that the tyre-pressure change rate within the current period satisfies the predetermined rule.

In the present embodiment, the predetermined rule comprises at least one of a first rule and a second rule, wherein the first rule is that the tyre-pressure change rate within the current period is less than the tyre-pressure change rate within the preceding one period and the difference obtained by subtracting the tyre-pressure change rate within the current period from the tyre-pressure change rate within the preceding one period is greater than a preset change-rate difference; and the second rule is that the tyre-pressure change rate within the current period is less than the preset tyre-pressure-change-rate threshold.

Although that the tyre pressure within the current period is less than the tyre pressure within the preceding one period and the tyre-pressure change rate within the current period is less than the tyre-pressure change rate within the preceding one period can characterize the instantaneous decreasing of the tyre pressure, in some particular cases, the tyre pressure of the tyre might have a slight fluctuation, which, however, is less than the amplitude of the decreasing of the tyre pressure in foreign-matter puncturing, and, in this case, it might also be satisfied that the tyre pressure within the current period is less than the tyre pressure within the preceding one period and the tyre-pressure change rate within the current period is less than the tyre-pressure change rate within the preceding one period. Therefore, in order to further improve the accuracy of the detection on foreign-matter puncturing, in the present embodiment, the preset change-rate difference is provided, wherein the preset change-rate difference can be used to distinguish whether the tyre pressure instantaneously decreases or the tyre pressure slight fluctuates.

Merely when the tyre-pressure comparison result of a certain tyre does not only satisfy that the tyre pressure within the current period is less than the tyre pressure within the preceding one period and the tyre-pressure change rate within the current period is less than the tyre-pressure change rate within the preceding one period, but also satisfies, at the same time, that the difference obtained by subtracting the tyre-pressure change rate within the current period from the tyre-pressure change rate within the preceding one period is greater than a preset change-rate difference, it can be determined that the tyre pressure of the tyre instantaneously decreases, and the tyre has a risk of foreign-matter puncturing.

The preset change-rate difference may be obtained by calibration, which is not limited particularly herein. As an example, the preset change-rate difference may be 2KPa/s, 3KPa/s and so on.

In an alternative implementation, when the tyre-pressure change amount is used to characterize the instantaneous decreasing of the tyre pressure, the first preset condition is that the tyre pressure within the current period is less than the tyre pressure within the preceding one period, the tyre-pressure change amount within the current period is less than the tyre-pressure change amount within the preceding one period, and the difference obtained by subtracting the tyre-pressure change amount within the current period from the tyre-pressure change amount within the preceding one period is greater than a preset change-amount difference; or the first preset condition is that the tyre pressure within the current period is less than the tyre pressure within the preceding one period and the tyre-pressure change amount within the current period is less than a preset tyre-pressure-change-amount threshold. The tyre-pressure change amount within the current period = the tyre pressure within the current period - the tyre pressure within the preceding one period.

The preset change-amount difference may be obtained by calibration, which is not limited particularly herein. As an example, the preset change-rate difference may be 200Pa, 300Pa and so on.

In some embodiments, step S102 may include:

for each of the tyres of the vehicle, if the tyre-pressure comparison result of the tyre satisfies the first preset condition, and the tyre-pressure comparison result of at least one of a plurality of remaining tyres of the vehicle other than that tyre does not satisfy the first preset condition, determining that the tyre has a risk of foreign-matter puncturing.

Because, when a certain tyre is punctured by a foreign matter, its tyre pressure instantaneously decreases, but the other tyres still maintain stable variation, in order to further improve the accuracy of the detection on a risk of foreign-matter puncturing of the tyres, in the detection on whether each of the tyres has a risk of foreign-matter puncturing, not only it is detected whether the tyre-pressure comparison result of the to-be-detected tyre satisfies the first preset condition, but also it is required to detect whether, among the plurality of remaining tyres other than the to-be-detected tyre, there exist remaining tyres whose tyre-pressure comparison results do not satisfy the first preset condition. If both of those two conditions are satisfied, then it is determined that the to-be-detected tyre has a risk of foreign-matter puncturing, and if no, it is determined that the to-be-detected tyre does not have a risk of foreign-matter puncturing.

The tyre-pressure comparison results of the remaining tyres that do not satisfy the first preset condition characterize the variations of the tyre pressures of the tyres in the normal state (in other words, not punctured by a foreign matter), and that the variation of the tyre pressure of the to-be-detected tyre and the variations of the tyre pressures of the remaining tyres that do not satisfy the first preset condition are different indicates that the to-be-detected tyre has a risk of foreign-matter puncturing.

As an example, the to-be-detected tyre is referred to as the first tyre, and all of the remaining tyres among all of the tyres of the vehicle other than the first tyre are referred to as the second tyres. If the tyre-pressure comparison result of the first tyre satisfies the first preset condition, and at least one of the second tyres does not satisfy the first preset condition, then it is determined that the first tyre has a risk of foreign-matter puncturing, and if no, it is determined that the first tyre does not have a risk of foreign-matter puncturing.

Not satisfying the first preset condition includes that the tyre pressure within the current period is not less than the tyre pressure within the preceding one period, or that the tyre-pressure change rate within the current period does not satisfy the predetermined rule. That the tyre-pressure change rate within the current period does not satisfy the predetermined rule includes that the tyre-pressure change rate within the current period does not satisfy the first rule and does not satisfy the second rule.

When the first rule is that the tyre-pressure change rate within the current period is less than the tyre-pressure change rate within the preceding one period, that the tyre-pressure change rate within the current period does not satisfy the predetermined rule is that the tyre-pressure change rate within the current period is not less than the tyre-pressure change rate within the preceding one period.

When the first rule is that the tyre-pressure change rate within the current period is less than the tyre-pressure change rate within the preceding one period and the difference obtained by subtracting the tyre-pressure change rate within the current period from the tyre-pressure change rate within the preceding one period is greater than a preset change-rate difference, that the tyre-pressure change rate within the current period does not satisfy the predetermined rule is that the tyre-pressure change rate within the current period is not less than the tyre-pressure change rate within the preceding one period or that the difference obtained by subtracting the tyre-pressure change rate within the current period from the tyre-pressure change rate within the preceding one period is not greater than a preset change-rate difference.

That the tyre-pressure change rate within the current period does not satisfy the second rule is that the tyre-pressure change rate within the current period is not less than the preset tyre-pressure-change-rate threshold.

In an alternative implementation, because merely when the vehicle has been powered on the tyre pressures of the tyres are monitored in real time, when the vehicle has just been powered on, the tyre pressures of the tyres within the preceding one period cannot be obtained. Therefore, when the vehicle has just been powered on, the tyre pressures within the period when the vehicle was powered off last time are used as the tyre pressures within the preceding one period, and are compared with the tyre pressures within the current period when it is just powered on this time.

S103: if it is detected that the vehicle has a tyre having a risk of foreign-matter puncturing, outputting an alarming message.

In the present embodiment, it is detected in real time whether the self-repairing tyres of the vehicle have a risk of foreign-matter puncturing, and if it is detected that the vehicle has a self-repairing tyre having a risk of foreign-matter puncturing, then an alarming message is outputted, to alert the driver to treat in time the self-repairing tyre having a risk of foreign-matter puncturing, thereby ensuring the safety of travelling.

In some embodiments, step S103 may include:

if it is detected that the vehicle has a tyre having a risk of foreign-matter puncturing, sending a tyre-pressure alarming signal to a dashboard, and/or sending a position of the tyre having a risk of foreign-matter puncturing to a voice reporting device, wherein the tyre-pressure alarming signal is for instructing the dashboard to control a tyre-pressure alarming indicator lamp to flicker; and the position of the tyre having a risk of foreign-matter puncturing is for instructing the voice reporting device to report the position of the tyre having a risk of foreign-matter puncturing.

In the present embodiment, if it is detected that the vehicle has a tyre having a risk of foreign-matter puncturing, then light alarming may be performed by using the dashboard, and/or sound alarming may be performed by using the on-board voice reporting device.

Given that the self-repairing tyre can enable the vehicle to travel normally when a tyre has been punctured by a foreign matter, and the driver might neglect or pay no attention to the alarming message on a display screen, in the present embodiment the alarming is performed by using the dashboard and/or the voice reporting device, to alert the driver to check the state of the tyres as soon as possible.

The dashboard is provided with the tyre-pressure alarming indicator lamp, and, when has received the tyre-pressure alarming signal, controls the indicator lamp to flicker. The voice reporting device, when has received the position of the tyre having a risk of foreign-matter puncturing, performs voice reporting. As an example, it may report that "the left front tyre has a risk of foreign-matter puncturing and please treat it in time" and so on. The position of the tyre having a risk of foreign-matter puncturing indicates the position of the tyre having a risk of foreign-matter puncturing; for example, the left front tyre, the left rear tyre, the right front tyre or the right rear tyre has a risk of foreign-matter puncturing.

In an alternative implementation, text alerting may be performed by using an on-board display screen, for example, displaying the content of the voice reporting on the display screen in the form of texts.

If it is detected that the vehicle does not have a tyre having a risk of foreign-matter puncturing, then it is not required to alarm, and the monitoring continues.

It can be known from the above description that, in the embodiments of the present invention, by acquiring the tyre-pressure comparison results of the tyres, and if the tyre-pressure comparison result of a certain tyre is that the tyre pressure within the current period is less than the tyre pressure within the preceding one period and the tyre-pressure change rate within the current period satisfies a predetermined rule, wherein the predetermined rule includes at least one of that the tyre-pressure change rate within the current period is less than the tyre-pressure change rate within the preceding one period and that the tyre-pressure change rate within the current period is less than a preset tyre-pressure-change-rate threshold, determining that the tyre has a risk of foreign-matter puncturing, a tyre having a risk of foreign-matter puncturing can be identified. If it is determined that the vehicle has a tyre having a risk of foreign-matter puncturing, then an alarming message is outputted, to alert the driver in time that the vehicle has a tyre having a risk of foreign-matter puncturing, which is required to be treated in time, to prevent affecting the safety of travelling.

In an alternative implementation, the method for alerting foreign-matter puncturing for a self-repairing tyre further comprises:

if a failure message sent by a tyre-pressure controller has been received, sending the failure message to a dashboard, wherein the failure message is for instructing the dashboard to perform failure alarming, and the failure message is a message generated if the tyre-pressure controller, within the current period, does not receive a real-time tyre pressure sent by a corresponding tyre-pressure sensor.

In the present embodiment, if the tyre-pressure controller, within a certain period, does not receive the real-time tyre pressure sent by the corresponding tyre-pressure sensor, or the received real-time tyre pressures are unstable (discontinuous), then it generates the failure message, and sends the failure message to the electronic device. The electronic device may send the failure message to the dashboard, and the dashboard performs failure alarming according to the failure message; for example, it may control the corresponding failure indicator lamp to flicker, and so on.

That the received real-time tyre pressures are unstable indicates that the real-time tyre pressures are not received continuously within a plurality of periods. Usually, the tyre-pressure sensor collects the tyre pressures at constant periods, and accordingly the tyre-pressure controller also receives the tyre pressures at the constant periods. If the tyre-pressure controller does not receive the tyre pressures at the constant periods, then it is considered that the real-time tyre pressures that it receives are unstable.

In an alternative implementation, after the driver has repaired the tyre having a risk of foreign-matter puncturing, the tyre pressures of the tyres of the vehicle maintain substantially equal. When it is detected that the tyre pressures of the tyres maintain substantially equal (In other words, the differences between the tyre pressures of the tyres are in a very small range), the system is reset. In other words, all of the previous tyre-pressure data, sound-light alarming messages and so on may be deleted, and a new round of the real-time monitoring begins.

The present embodiment, in order to solve the potential safety hazard of self-repairing tyres, provides a method for alerting foreign-matter puncturing for a self-repairing tyre, which uses an active tyre-pressure-sensor module and related identifying algorithms to monitor the tyre pressures in real time, and uses the instantaneous changing of the tyre pressures as the judgement condition, to reduce the system errors and improve the reliability. Moreover, the system is provided with enhanced alerting modules (sound-light alarming), to prevent the driver from unintentionally, due to negligence, or intentionally avoiding treating the problem after tyre puncturing. The present embodiment solves the hidden safety risk after tyre puncturing of self-repairing tyres, and reduces the cost in maintenance, which improves the safety of self-repairing tyres while ensuring the convenience.

It should be understood that the sequence of the serial numbers of the steps in the above embodiments do not indicate the sequence of the execution thereof, and the sequence of the execution of the steps should be decided according to their functions and internal logic, and should not limit the implementation of the embodiments of the present invention in any manner.

The device embodiments of the present invention will be described below, and the details not described in detail therein may refer to the above-described corresponding process embodiments. It should be considered that the details not described in detail in the device embodiments are the same as those in the process embodiments, and have already been set forth explicitly in the description.

FIG. 2 shows a schematic structural diagram of an apparatus for alerting foreign-matter puncturing for a self-repairing tyre according to an embodiment of the present invention. For the convenience of the description, merely the parts relevant to the embodiments of the present invention are shown, and it will be described in detail as follows:

As shown in FIG. 2, the apparatus for alerting foreign-matter puncturing for a self-repairing tyre 30 comprises an acquiring module 31, a judging module 32 and an alerting module 33.

The acquiring module 31 is configured for acquiring tyre-pressure comparison results of tyres of a vehicle;
the judging module 32 is configured for, for each of the tyres of the vehicle, if the tyre-pressure comparison result of the tyre satisfies a first preset condition, determining that the tyre has a risk of foreign-matter puncturing;
wherein the first preset condition is that a tyre pressure within a current period is less than a tyre pressure within a preceding one period and a tyre-pressure change rate within the current period satisfies a predetermined rule, wherein the predetermined rule includes at least one of that the tyre-pressure change rate within the current period is less than a tyre-pressure change rate within the preceding one period and that the tyre-pressure change rate within the current period is less than a preset tyre-pressure-change-rate threshold, and the tyre-pressure change rate within the current period = (the tyre pressure within the current period - the tyre pressure within the preceding one period)/a duration of one period; and
the alerting module 33 is configured for, if it is detected that the vehicle has a tyre having a risk of foreign-matter puncturing, outputting an alarming message.

In the embodiments of the present invention, by, by the acquiring module, acquiring the tyre-pressure comparison results of the tyres, and by the judging module, if the tyre-pressure comparison result of a certain tyre is that the tyre pressure within the current period is less than the tyre pressure within the preceding one period and the tyre-pressure change rate within the current period satisfies a predetermined rule, wherein the predetermined rule includes at least one of that the tyre-pressure change rate within the current period is less than the tyre-pressure change rate within the preceding one period and that the tyre-pressure change rate within the current period is less than a preset tyre-pressure-change-rate threshold, determining that the tyre has a risk of foreign-matter puncturing, a tyre having a risk of foreign-matter puncturing can be identified. By the alerting module, if it is determined that the vehicle has a tyre having a risk of foreign-matter puncturing, then an alarming message is outputted, to alert the driver in time that the vehicle has a tyre having a risk of foreign-matter puncturing, which is required to be treated in time, to prevent affecting the safety of travelling.

In an alternative implementation, the judging module 32 is further configured for:
after it is determined that the tyre-pressure change rate within the current period is less than the tyre-pressure change rate within the preceding one period, determining whether a difference obtained by subtracting the tyre-pressure change rate within the current period from the tyre-pressure change rate within the preceding one period is greater than a preset change-rate difference, and if yes, determining that the tyre-pressure change rate within the current period satisfies the predetermined rule.

In an alternative implementation, the judging module 32 is particularly configured for:
for each of the tyres of the vehicle, if the tyre-pressure comparison result of the tyre satisfies the first preset condition, and the tyre-pressure comparison result of at least one of a plurality of remaining tyres of the vehicle other than that tyre does not satisfy the first preset condition, determining that the tyre has a risk of foreign-matter puncturing.

In an alternative implementation, the alerting module 33 is particularly configured for:
if it is detected that the vehicle has a tyre having a risk of foreign-matter puncturing, sending a tyre-pressure alarming signal to a dashboard, and/or sending a position of the tyre having a risk of foreign-matter puncturing to a voice reporting device, wherein the tyre-pressure alarming signal is for instructing the dashboard to control a tyre-pressure alarming indicator lamp to flicker; and the position of the tyre having a risk of foreign-matter puncturing is for instructing the voice reporting device to report the position of the tyre having a risk of foreign-matter puncturing.

In an alternative implementation, the acquiring module 31 is particularly configured for:
receiving the tyre-pressure comparison results of the correspond tyres sent by tyre-pressure controllers of the tyres, wherein each of the tyre-pressure comparison results is obtained by, by the corresponding instance of the tyre-pressure controllers, obtaining the tyre pressures within periods of the corresponding instance of the tyres by using a corresponding tyre-pressure sensor, and pre-processing the tyre pressures within the periods of the corresponding tyre.

An embodiment of the present invention further provides a computer program product, wherein the computer program product has a program code, and the program code, when executed in a corresponding processor, controller, computing device or electronic device, implements the steps of any one of the above embodiments of the method for alerting foreign-matter puncturing for a self-repairing tyre, for example, S101 to S103 shown in FIG. 1. A person skilled in the art should understand that the method and the device according to the embodiments of the present invention may be embodied in various forms of hardware, software, firmware, dedicated processors or a combination thereof. The dedicated processors may include an Application Specific Integrated Circuit (ASIC), a Reduced Instruction-Set Computer (RISC) and/or a Field-Programmable Gate Array (FPGA). The method and the device are preferably embodied as a combination of hardware and software. The software is preferably installed in a program storage device as an application program. It is typically a machine based on a computer platform having hardware, for example, one or more central processing units (CPU), a Random Access Memory (RAM) and one or more inputting/outputting (I/O) interfaces. The operating system is typically also installed in the computer platform. The processes and the functions described herein may be part of the application program, or part of them may be performed by the operating system.

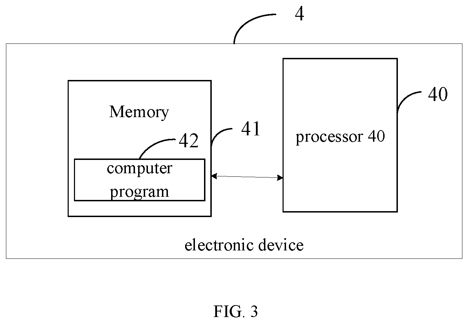

FIG. 3 is a schematic diagram of an electronic device. As shown in FIG. 3, the electronic device 4 comprises a processor 40, a memory 41, and a computer program 42 that is stored in the memory 41 and executable in the processor 40. The processor 40, when executing the computer program 42, implements the steps of the above method for alerting foreign-matter puncturing for a self-repairing tyre, for example, S101 to S103 shown in FIG. 1. Alternatively, the processor 40, when executing the computer program 42, implements the functions of the modules/units according to the above apparatus, for example, the functions of the modules/units 31 to 33 shown in FIG. 2.

As an example, the computer program 42 may be divided into one or more modules/units, and the one or more modules/units are stored in the memory 41, and are executed by the processor 40, to complete/implement the solutions according to the present invention. The one or more modules/units may be a series of computer program instruction segments that can complete specific functions, and the instruction segments are used to describe the process of the execution of the computer program 42 in the electronic device 4. For example, the computer program 42 may be divided into the modules/units 31 to 33 shown in FIG. 2.

The electronic device 4 may be a device such as a vehicle-body domain controller or a central controller. The electronic device 4 may comprise, without limitation, a processor 40 and a memory 41. A person skilled in the art can understand that FIG. 3 is merely an example of the electronic device 4, does not limit the electronic device 4, and may comprise more or fewer components than those shown in the figure, or a combination of some of the components, or different components. For example, the electronic device may further comprise an inputting-outputting device, a network accessing device, a bus and so on.

The processors 40 may be a Central Processing Unit (CPU), and may also be another generic processor, Digital Signal Processor (DSP), Application Specific Integrated Circuit (ASIC), Field-Programmable Gate Array (FPGA) or another programmable logic device, discrete gate or transistor logic device, discrete hardware assembly and so on. The generic processor may be a microprocessor, and the processor may also be any conventional processor.

The memory 41 may be an internal storage unit of the electronic device 4, for example, a hard disk or an internal memory of the electronic device 4. The memory 41 may also be an external storage device of the electronic device 4, for example, a plug-connected hard disk, a Smart Media Card (SMC), a Secure Digital (SD) card, a Flash Card, and so on, that the electronic device 4 is equipped with. Optionally, the memory 41 may also include not only the internal storage unit of the electronic device 4 but also the external storage device. The memory 41 is configured to store the computer program, and other programs and data that are required by the electronic device. The memory 41 may also be configured to temporarily store the data that have already been outputted or will be outputted.

The present invention further provides a vehicle, wherein the vehicle comprises the apparatus or the electronic device stated above, and has the advantageous effects the same as those of the apparatus or the electronic device.

A person skilled in the art can clearly understand that, in order for convenience and brevity of the description, the division of the above functional units and modules is merely taken as an example for the description. In practical applications, the above functions may be assigned to be completed by different functional units and modules according to demands, i.e., dividing the internal structure of the apparatus into different functional units or modules, to complete all or some of the functions described above. The functional units and modules according to the embodiments may be integrated into one processing unit, or the units may also separately physically exist, or two or more of the units may also be integrated into one unit. The above-described integrated unit may be embodied in the form of hardware, and may also be embodied in the form of a software function unit. In addition, the particular names of the functional units and modules are merely for the convenience of distinguishing from each other, and are not intended to limit the protection scope of the present invention. The particular working processes of the units and modules in the above-described systems may refer to the corresponding processes according to the above-described process embodiments, and are not discussed further herein.

In the above embodiments, the descriptions on the embodiments have respective emphases, and the parts of a certain embodiment that are not described or set forth in detail may refer to the relevant descriptions on the other embodiments.

A person skilled in the art can envisage that the units and the algorithm steps of the examples described with reference to the embodiments disclosed herein may be implemented by using electronic hardware or a combination of computer software and electronic hardware. Whether those functions are executed by hardware or software depends on the particular applications and the design constraints of the technical solutions. A person skilled in the art may employ different methods to implement the described functions with respect to each of the particular applications, but the implementations should not be considered as extending beyond the scope of the present invention.

In the embodiments of the present invention, it should be understood that the disclosed apparatus/electronic device and method may be implemented in other manners. For example, the above-described device/electronic device embodiments are merely illustrative. For example, the division between the modules/units is merely a division in the logic functions, and in the actual implementation there may be another mode of division. For example, multiple units or components may be combined or may be integrated into another system, or some of the features may be omitted, or not implemented. Additionally, the coupling or direct coupling or communicative connection between the illustrated or discussed components may be via interfaces or the indirect coupling or communicative connection between the devices or units, and may be electric, mechanical or in other forms.

The units that are described as separate components may or may not be physically separate, and the components that are displayed as units may or may not be physical units; in other words, they may be located at the same one location, and may also be distributed to a plurality of network units. Some or all of the units may be selected according to practical demands to realize the purposes of the solutions of the embodiments.

Furthermore, the functional units according to the embodiments of the present invention may be integrated into one processing unit, or the units may also separately physically exist, or two or more of the units may also be integrated into one unit. The above-described integrated unit may be embodied in the form of hardware, and may also be embodied in the form of a software function unit.

The integrated modules/units, if embodied in the form of software function units and sold or used as an independent product, may be stored in a computer-readable storage medium. On the basis of such a comprehension, all or some of the processes of the methods according to the embodiments of the present invention may be implemented by relative hardware according to an instruction from a computer program, the computer program may be stored in a computer-readable storage medium, and the computer program, when executed by a processor, can implement the steps of the above embodiments of the method for alerting foreign-matter puncturing for a self-repairing tyre. The computer program comprises a computer program code, and the computer program code may be a source code, an object code, an executable file, some intermediate forms, and so on. The computer-readable medium may include any entity or device that can carry the computer program code, including a recording medium, a USB flash disk, a mobile hard disk drive, a diskette, an optical disk, a computer memory, a Read-Only Memory (ROM), a Random Access Memory (RAM), an electric carrier signal, a telecommunication signal, a software distribution medium and so on. It should also be noted that the contents included by the computer-readable medium may be properly added or removed according to the requirements by the practices of the legislation and the patent within jurisdictions. For example, within certain jurisdictions, according to the practices of the legislation and the patent, the computer-readable medium does not include an electric carrier signal and a telecommunication signal.

## Claims

1. A method for alerting foreign-matter puncturing for a self-repairing tyre, wherein the method comprises:
(S101) acquiring tyre-pressure comparison results of tyres of a vehicle;
**characterized by**
(S102) for each of the tyres of the vehicle, if the tyre-pressure comparison result of the tyre satisfies a first preset condition, determining that the tyre has a risk of foreign-matter puncturing;
wherein the first preset condition is that a tyre pressure within a current period is less than a tyre pressure within a preceding one period and a tyre-pressure change rate within the current period satisfies a predetermined rule, wherein the predetermined rule includes at least one of that the tyre-pressure change rate within the current period is less than a tyre-pressure change rate within the preceding one period and that the tyre-pressure change rate within the current period is less than a preset tyre-pressure-change-rate threshold, and the tyre-pressure change rate within the current period = (the tyre pressure within the current period - the tyre pressure within the preceding one period)/a duration of one period; and
(S103) if it is detected that the vehicle has a tyre having a risk of foreign-matter puncturing, outputting an alarming message.

2. The method according to claim 1, wherein after it is determined that the tyre-pressure change rate within the current period is less than the tyre-pressure change rate within the preceding one period, the method further comprises:
determining whether a difference obtained by subtracting the tyre-pressure change rate within the current period from the tyre-pressure change rate within the preceding one period is greater than a preset change-rate difference, and if yes, determining that the tyre-pressure change rate within the current period satisfies the predetermined rule.

3. The method according to claim 1 or 2, wherein the step of, for each of the tyres of the vehicle, if the tyre-pressure comparison result of the tyre satisfies the first preset condition, determining that the tyre has a risk of foreign-matter puncturing comprises:
for each of the tyres of the vehicle, if the tyre-pressure comparison result of the tyre satisfies the first preset condition, and the tyre-pressure comparison result of at least one of a plurality of remaining tyres of the vehicle other than that tyre does not satisfy the first preset condition, determining that the tyre has a risk of foreign-matter puncturing.

4. The method according to claim 1, wherein the step of, if it is detected that the vehicle has a tyre having a risk of foreign-matter puncturing, outputting the alarming message comprises:
if it is detected that the vehicle has a tyre having a risk of foreign-matter puncturing, sending a tyre-pressure alarming signal to a dashboard, and/or sending a position of the tyre having a risk of foreign-matter puncturing to a voice reporting device, wherein the tyre-pressure alarming signal is for instructing the dashboard to control a tyre-pressure alarming indicator lamp to flicker; and the position of the tyre having a risk of foreign-matter puncturing is for instructing the voice reporting device to report the position of the tyre having a risk of foreign-matter puncturing.

5. The method according to claim 1, wherein the step of acquiring the tyre-pressure comparison results of the tyres of the vehicle comprises:
receiving the tyre-pressure comparison results of the correspond tyres sent by tyre-pressure controllers of the tyres, wherein each of the tyre-pressure comparison results is obtained by, by the corresponding instance of the tyre-pressure controllers, obtaining the tyre pressures within periods of the corresponding instance of the tyres by using a corresponding tyre-pressure sensor, and pre-processing the tyre pressures within the periods of the corresponding tyre.

6. The method according to claim 1, wherein the method further comprises:
if a failure message sent by a tyre-pressure controller has been received, sending the failure message to a dashboard, wherein the failure message is for instructing the dashboard to perform failure alarming, and the failure message is a message generated if the tyre-pressure controller, within the current period, does not receive a real-time tyre pressure sent by a corresponding tyre-pressure sensor.

7. The method according to claim 1, wherein the method further comprises:
after the tyre having a risk of foreign-matter puncturing has been repaired, if it is detected that the tyre pressures of the tyres maintain substantially equal, restarting real-time detection.

8. An apparatus (30) for alerting foreign-matter puncturing for a self-repairing tyre, wherein the apparatus comprises:
an acquiring module (31) configured for acquiring tyre-pressure comparison results of tyres of a vehicle;
**characterized by**
a judging module (32) configured for, for each of the tyres of the vehicle, if the tyre-pressure comparison result of the tyre satisfies a first preset condition, determining that the tyre has a risk of foreign-matter puncturing;
wherein the first preset condition is that a tyre pressure within a current period is less than a tyre pressure within a preceding one period and a tyre-pressure change rate within the current period satisfies a predetermined rule, wherein the predetermined rule includes at least one of that the tyre-pressure change rate within the current period is less than a tyre-pressure change rate within the preceding one period and that the tyre-pressure change rate within the current period is less than a preset tyre-pressure-change-rate threshold, and the tyre-pressure change rate within the current period = (the tyre pressure within the current period - the tyre pressure within the preceding one period)/a duration of one period; and
an alerting module (33) configured for, if it is detected that the vehicle has a tyre having a risk of foreign-matter puncturing, outputting an alarming message.

9. The apparatus (30) for alerting foreign-matter puncturing for a self-repairing tyre according to claim 8, wherein the judging module (32) is further configured for:
after it is determined that the tyre-pressure change rate within the current period is less than the tyre-pressure change rate within the preceding one period, determining whether a difference obtained by subtracting the tyre-pressure change rate within the current period from the tyre-pressure change rate within the preceding one period is greater than a preset change-rate difference, and if yes, determining that the tyre-pressure change rate within the current period satisfies the predetermined rule.

10. The apparatus (30) for alerting foreign-matter puncturing for a self-repairing tyre according to claim 8 or 9, wherein the judging module (32) is configured for:
for each of the tyres of the vehicle, if the tyre-pressure comparison result of the tyre satisfies the first preset condition, and the tyre-pressure comparison result of at least one of a plurality of remaining tyres of the vehicle other than that tyre does not satisfy the first preset condition, determining that the tyre has a risk of foreign-matter puncturing.

11. The apparatus (30) for alerting foreign-matter puncturing for a self-repairing tyre according to claim 8, wherein the alerting module (33) is configured for:
if it is detected that the vehicle has a tyre having a risk of foreign-matter puncturing, sending a tyre-pressure alarming signal to a dashboard, and/or sending a position of the tyre having a risk of foreign-matter puncturing to a voice reporting device, wherein the tyre-pressure alarming signal is for instructing the dashboard to control a tyre-pressure alarming indicator lamp to flicker; and the position of the tyre having a risk of foreign-matter puncturing is for instructing the voice reporting device to report the position of the tyre having a risk of foreign-matter puncturing.

12. The apparatus (30) for alerting foreign-matter puncturing for a self-repairing tyre according to claim 8, wherein the acquiring module (31) is configured for:
receiving the tyre-pressure comparison results of the correspond tyres sent by tyre-pressure controllers of the tyres, wherein each of the tyre-pressure comparison results is obtained by, by the corresponding instance of the tyre-pressure controllers, obtaining the tyre pressures within periods of the corresponding instance of the tyres by using a corresponding tyre-pressure sensor, and pre-processing the tyre pressures within the periods of the corresponding tyre.

13. A vehicle, wherein the vehicle comprises the apparatus according to any of the claims 8 to 12.

## Patentansprüche

1. Verfahren zum Warnen vor Fremdkörper-Durchstichen bei einem selbstreparierenden Reifen, wobei das Verfahren aufweist:
(S101) Erfassen von Reifendruckvergleichsergebnissen der Reifen eines Fahrzeugs;
**dadurch gekennzeichnet, dass**
(S102) für jeden der Reifen des Fahrzeugs, falls das Reifendruckvergleichsergebnis des Reifens eine erste voreingestellte Bedingung erfüllt, bestimmt wird, dass der Reifen ein Fremdkörperdurchstich-Risiko aufweist;
wobei die erste voreingestellte Bedingung darin besteht, dass ein Reifendruck innerhalb einer aktuellen Periode geringer ist als ein Reifendruck innerhalb einer unmittelbar vorausgehenden Periode und eine Reifendruckänderungsrate innerhalb der aktuellen Periode eine vorbestimmte Regel erfüllt, wobei die vorbestimmte Regel mindestens eines von Folgendem umfasst: dass die Reifendruckänderungsrate innerhalb der aktuellen Periode geringer ist als eine Reifendruckänderungsrate innerhalb der unmittelbar vorausgehenden Periode und dass die Reifendruckänderungsrate innerhalb der aktuellen Periode geringer ist als ein voreingestellter Reifendruckänderungsraten-Schwellenwert, und die Reifendruckänderungsrate innerhalb der aktuellen Periode = (der Reifendruck innerhalb der aktuellen Periode - der Reifendruck innerhalb der unmittelbar vorausgehenden Periode)/eine Periodendauer; und
(S103) falls erfasst wird, dass das Fahrzeug einen Reifen mit Fremdkörperdurchstich-Risiko aufweist, Ausgeben einer Warnmeldung.

2. Verfahren nach Anspruch 1, wobei, nachdem bestimmt wurde, dass die Reifendruckänderungsrate innerhalb der aktuellen Periode geringer ist als die Reifendruckänderungsrate innerhalb der unmittelbar vorausgehenden Periode, das Verfahren ferner aufweist:
Bestimmen, ob eine Differenz, erhalten durch Subtrahieren der Reifendruckänderungsrate innerhalb der aktuellen Periode von der Reifendruckänderungsrate innerhalb der unmittelbar vorausgehenden Periode, größer ist als eine voreingestellte Änderungsraten-Differenz, und falls ja, Bestimmen, dass die Reifendruckänderungsrate innerhalb der aktuellen Periode die vorbestimmte Regel erfüllt.

3. Verfahren nach Anspruch 1 oder 2, wobei der Schritt, für jeden der Reifen des Fahrzeugs, falls das Reifendruckvergleichsergebnis des Reifens die erste voreingestellte Bedingung erfüllt, zu bestimmen, dass der Reifen ein Fremdkörperdurchstich-Risiko aufweist, aufweist:
für jeden der Reifen des Fahrzeugs, falls das Reifendruckvergleichsergebnis des Reifens die erste voreingestellte Bedingung erfüllt und das Reifendruckvergleichsergebnis von mindestens einem der mehreren übrigen Reifen des Fahrzeugs, ausgenommen diesen Reifen, die erste voreingestellte Bedingung nicht erfüllt, Bestimmen, dass der Reifen ein Fremdkörperdurchstich-Risiko aufweist.

4. Verfahren nach Anspruch 1, wobei der Schritt, falls erfasst wird, dass das Fahrzeug einen Reifen mit Fremdkörperdurchstich-Risiko aufweist, die Warnmeldung auszugeben, aufweist:
falls erfasst wird, dass das Fahrzeug einen Reifen mit Fremdkörperdurchstich-Risiko aufweist, Senden eines Reifendruck-Warnsignals an ein Kombiinstrument und/oder Senden einer Position des Reifens mit Fremdkörperdurchstich-Risiko an ein Sprachausgabegerät, wobei das Reifendruck-Warnsignal dazu dient, das Kombiinstrument anzuweisen, eine Reifendruck-Warnanzeigeleuchte blinken zu lassen; und die Position des Reifens mit Fremdkörperdurchstich-Risiko dazu dient, das Sprachausgabegerät anzuweisen, die Position des Reifens mit Fremdkörperdurchstich-Risiko auszugeben.

5. Verfahren nach Anspruch 1, wobei der Schritt des Erfassens der Reifendruckvergleichsergebnisse der Reifen des Fahrzeugs aufweist:
Empfangen der Reifendruckvergleichsergebnisse der jeweiligen Reifen, gesendet durch Reifendruck-Steuergeräte der Reifen, wobei jedes der Reifendruckvergleichsergebnisse dadurch erhalten wird, dass das jeweilige Reifendruck-Steuergerät mittels eines entsprechenden Reifendrucksensors die Reifendrücke innerhalb Perioden des jeweiligen Reifens erfasst und die Reifendrücke innerhalb der Perioden des jeweiligen Reifens vorverarbeitet.

6. Verfahren nach Anspruch 1, wobei das Verfahren ferner aufweist:
falls eine von einem Reifendruck-Steuergerät gesendete Fehlermeldung empfangen wurde, Senden der Fehlermeldung an ein Kombiinstrument, wobei die Fehlermeldung dazu dient, das Kombiinstrument zum Ausgeben einer Fehlerwarnung anzuweisen, und wobei die Fehlermeldung eine Meldung ist, die erzeugt wird, wenn das Reifendruck-Steuergerät innerhalb der aktuellen Periode keinen von einem entsprechenden Reifendrucksensor gesendeten Echtzeit-Reifendruck empfängt.

7. Verfahren nach Anspruch 1, wobei das Verfahren ferner aufweist:
nachdem der Reifen mit Fremdkörperdurchstich-Risiko repariert wurde, falls erfasst wird, dass die Reifendrücke der Reifen im Wesentlichen gleich bleiben, erneutes Starten der Echtzeit-Erfassung.

8. Vorrichtung (30) zum Warnen vor Fremdkörper-Durchstichen bei einem selbstreparierenden Reifen, wobei die Vorrichtung aufweist:
ein Erfassungsmodul (31), eingerichtet zum Erfassen von Reifendruckvergleichsergebnissen der Reifen eines Fahrzeugs;
**dadurch gekennzeichnet, dass**
ein Beurteilungsmodul (32) eingerichtet ist, für jeden der Reifen des Fahrzeugs, falls das Reifendruckvergleichsergebnis des Reifens eine erste voreingestellte Bedingung erfüllt, zu bestimmen, dass der Reifen ein Fremdkörperdurchstich-Risiko aufweist;
wobei die erste voreingestellte Bedingung darin besteht, dass ein Reifendruck innerhalb einer aktuellen Periode geringer ist als ein Reifendruck innerhalb einer unmittelbar vorausgehenden Periode und eine Reifendruckänderungsrate innerhalb der aktuellen Periode eine vorbestimmte Regel erfüllt, wobei die vorbestimmte Regel mindestens eines von Folgendem umfasst: dass die Reifendruckänderungsrate innerhalb der aktuellen Periode geringer ist als eine Reifendruckänderungsrate innerhalb der unmittelbar vorausgehenden Periode und dass die Reifendruckänderungsrate innerhalb der aktuellen Periode geringer ist als ein voreingestellter Reifendruckänderungsraten-Schwellenwert, und die Reifendruckänderungsrate innerhalb der aktuellen Periode = (der Reifendruck innerhalb der aktuellen Periode - der Reifendruck innerhalb der unmittelbar vorausgehenden Periode)/eine Periodendauer; und
ein Warnmodul (33), eingerichtet zum Ausgeben einer Warnmeldung, falls erfasst wird, dass das Fahrzeug einen Reifen mit Fremdkörperdurchstich-Risiko aufweist.

9. Vorrichtung (30) zum Warnen vor Fremdkörper-Durchstichen bei einem selbstreparierenden Reifen nach Anspruch 8, wobei das Beurteilungsmodul (32) ferner eingerichtet ist,
nachdem bestimmt wurde, dass die Reifendruckänderungsrate innerhalb der aktuellen Periode geringer ist als die Reifendruckänderungsrate innerhalb der unmittelbar vorausgehenden Periode, zu bestimmen, ob eine Differenz, erhalten durch Subtrahieren der Reifendruckänderungsrate innerhalb der aktuellen Periode von der Reifendruckänderungsrate innerhalb der unmittelbar vorausgehenden Periode, größer ist als eine voreingestellte Änderungsraten-Differenz, und falls ja, zu bestimmen, dass die Reifendruckänderungsrate innerhalb der aktuellen Periode die vorbestimmte Regel erfüllt.

10. Vorrichtung (30) zum Warnen vor Fremdkörper-Durchstichen bei einem selbstreparierenden Reifen nach Anspruch 8 oder 9, wobei das Beurteilungsmodul (32) eingerichtet ist,
für jeden der Reifen des Fahrzeugs, falls das Reifendruckvergleichsergebnis des Reifens die erste voreingestellte Bedingung erfüllt und das Reifendruckvergleichsergebnis von mindestens einem der mehreren übrigen Reifen des Fahrzeugs, ausgenommen diesen Reifen, die erste voreingestellte Bedingung nicht erfüllt, zu bestimmen, dass der Reifen ein Fremdkörperdurchstich-Risiko aufweist.

11. Vorrichtung (30) zum Warnen vor Fremdkörper-Durchstichen bei einem selbstreparierenden Reifen nach Anspruch 8, wobei das Warnmodul (33) eingerichtet ist,
falls erfasst wird, dass das Fahrzeug einen Reifen mit Fremdkörperdurchstich-Risiko aufweist, ein Reifendruck-Warnsignal an ein Kombiinstrument zu senden und/oder eine Position des Reifens mit Fremdkörperdurchstich-Risiko an ein Sprachausgabegerät zu senden, wobei das Reifendruck-Warnsignal dazu dient, das Kombiinstrument anzuweisen, eine Reifendruck-Warnanzeigeleuchte blinken zu lassen; und die Position des Reifens mit Fremdkörperdurchstich-Risiko dazu dient, das Sprachausgabegerät anzuweisen, die Position des Reifens mit Fremdkörperdurchstich-Risiko auszugeben.

12. Vorrichtung (30) zum Warnen vor Fremdkörper-Durchstichen bei einem selbstreparierenden Reifen nach Anspruch 8, wobei das Erfassungsmodul (31) eingerichtet ist,
die Reifendruckvergleichsergebnisse der jeweiligen Reifen zu empfangen, gesendet durch Reifendruck-Steuergeräte der Reifen, wobei jedes der Reifendruckvergleichsergebnisse dadurch erhalten wird, dass das jeweilige Reifendruck-Steuergerät mittels eines entsprechenden Reifendrucksensors die Reifendrücke innerhalb von Perioden des jeweiligen Reifens erfasst und die Reifendrücke innerhalb der Perioden des jeweiligen Reifens vorverarbeitet.

13. Fahrzeug, wobei das Fahrzeug die Vorrichtung nach einem der Ansprüche 8 bis 12 aufweist.

## Revendications

1. Procédé pour avertir d'une crevaison par un corps étranger pour un pneumatique autoréparable, dans lequel le procédé comprend :
(S101) l'acquisition de résultats de comparaison de pression de pneumatique de pneumatiques d'un véhicule ;
**caractérisé par** :
(S102) pour chacun des pneumatiques du véhicule, si le résultat de comparaison de pression de pneumatique du pneumatique satisfait une première condition prédéfinie, la détermination du fait que le pneumatique présente un risque de crevaison par un corps étranger ;
dans lequel la première condition prédéfinie consiste en ce qu'une pression de pneumatique à l'intérieur d'une période courante est inférieure à une pression de pneumatique à l'intérieur d'une période précédente considérée et en ce qu'un taux de variation de pression de pneumatique à l'intérieur de la période courante satisfait une règle prédéterminée, dans lequel la règle prédéterminée inclut au moins une règle parmi la règle consistant en ce que le taux de variation de pression de pneumatique à l'intérieur de la période courante est inférieur à un taux de variation de pression de pneumatique à l'intérieur de la période précédente considérée, la règle consistant en ce que le taux de variation de pression de pneumatique à l'intérieur de la période courante est inférieur à un seuil de taux de variation de pression de pneumatique prédéfini et la règle consistant en ce que le taux de variation de pression de pneumatique à l'intérieur de la période courante = (la pression de pneumatique à l'intérieur de la période courante - la pression de pneumatique à l'intérieur de la période précédente considérée)/une durée de la période considérée ; et
(S103) s'il est détecté que le véhicule comporte un pneumatique qui présente un risque de crevaison par un corps étranger, l'émission en sortie d'un message d'alarme.

2. Procédé selon la revendication 1, dans lequel, après qu'il a été déterminé que le taux de variation de pression de pneumatique à l'intérieur de la période courante est inférieur au taux de variation de pression de pneumatique à l'intérieur de la période précédente considérée, le procédé comprend en outre :
la détermination de si une différence qui est obtenue en soustrayant le taux de variation de pression de pneumatique à l'intérieur de la période courante du taux de variation de pression de pneumatique à l'intérieur de la période précédente considérée est ou non supérieure à une différence de taux de variation prédéfinie et si oui, la détermination du fait que le taux de variation de pression de pneumatique à l'intérieur de la période courante satisfait la règle prédéterminée.

3. Procédé selon la revendication 1 ou 2, dans lequel l'étape constituée par, pour chacun des pneumatiques du véhicule, si le résultat de comparaison de pression de pneumatique du pneumatique satisfait la première condition prédéfinie, la détermination du fait que le pneumatique présente un risque de crevaison par un corps étranger comprend :
pour chacun des pneumatiques du véhicule, si le résultat de comparaison de pression de pneumatique du pneumatique satisfait la première condition prédéfinie et que le résultat de comparaison de pression de pneumatique d'au moins l'un d'une pluralité de pneumatiques restants du véhicule autre que ce pneumatique ne satisfait pas la première condition prédéfinie, la détermination du fait que le pneumatique présente un risque de crevaison par un corps étranger.

4. Procédé selon la revendication 1, dans lequel l'étape constituée par, s'il est détecté que le véhicule comporte un pneumatique qui présente un risque de crevaison par un corps étranger, l'émission en sortie du message d'alarme comprend :
s'il est détecté que le véhicule comporte un pneumatique qui présente un risque de crevaison par un corps étranger, l'envoi d'un signal d'alarme de pression de pneumatique à un tableau de bord et/ou l'envoi d'une position du pneumatique qui présente un risque de crevaison par un corps étranger à un dispositif de rapport vocal, dans lequel le signal d'alarme de pression de pneumatique a pour objet de demander en instruction au tableau de bord de commander un voyant lumineux d'alarme de pression de pneumatique pour qu'il clignote ; et la position du pneumatique qui présente un risque de crevaison par un corps étranger a pour objet de demander en instruction au dispositif de rapport vocal de rapporter la position du pneumatique qui présente un risque de crevaison par un corps étranger.

5. Procédé selon la revendication 1, dans lequel l'étape d'acquisition des résultats de comparaison de pression de pneumatique des pneumatiques du véhicule comprend :
la réception des résultats de comparaison de pression de pneumatique des pneumatiques correspondants qui sont envoyés par des contrôleurs de pression de pneumatique des pneumatiques, dans lequel chacun des résultats de comparaison de pression de pneumatique est obtenu en, au moyen de l'instance correspondante des contrôleurs de pression de pneumatique, obtenant les pressions de pneumatique à l'intérieur de périodes de l'instance correspondante des pneumatiques en utilisant un capteur de pression de pneumatique correspondant, et le prétraitement des pressions de pneumatique à l'intérieur des périodes du pneumatique correspondant.

6. Procédé selon la revendication 1, dans lequel le procédé comprend en outre :
si un message de défaillance qui a été envoyé par un contrôleur de pression de pneumatique a été reçu, l'envoi du message de défaillance sur un tableau de bord, dans lequel le message de défaillance a pour objet de demander en instruction au tableau de bord de produire une alarme de défaillance, et le message de défaillance est un message qui est généré si le contrôleur de pression de pneumatique, à l'intérieur de la période courante, ne reçoit pas une pression de pneumatique en temps réel envoyée par un capteur de pression de pneumatique correspondant.

7. Procédé selon la revendication 1, dans lequel le procédé comprend en outre :
après que le pneumatique qui présente un risque de crevaison par un corps étranger a été réparé, s'il est détecté que les pressions de pneumatique des pneumatiques restent sensiblement égales, le redémarrage d'une détection en temps réel.

8. Appareil (30) pour avertir d'une crevaison par un corps étranger pour un pneumatique autoréparable, dans lequel l'appareil comprend :
un module d'acquisition (31) configuré pour acquérir des résultats de comparaison de pression de pneumatique de pneumatiques d'un véhicule ;
**caractérisé par** :
un module d'appréciation (32) configuré pour, pour chacun des pneumatiques du véhicule, si le résultat de comparaison de pression de pneumatique du pneumatique satisfait une première condition prédéfinie, déterminer que le pneumatique présente un risque de crevaison par un corps étranger ;
dans lequel la première condition prédéfinie consiste en ce qu'une pression de pneumatique à l'intérieur d'une période courante est inférieure à une pression de pneumatique à l'intérieur d'une période précédente considérée et en ce qu'un taux de variation de pression de pneumatique à l'intérieur de la période courante satisfait une règle prédéterminée, dans lequel la règle prédéterminée inclut au moins une règle parmi la règle consistant en ce que le taux de variation de pression de pneumatique à l'intérieur de la période courante est inférieur à un taux de variation de pression de pneumatique à l'intérieur de la période précédente considérée, la règle consistant en ce que le taux de variation de pression de pneumatique à l'intérieur de la période courante est inférieur à un seuil de taux de variation de pression de pneumatique prédéfini et la règle consistant en ce que le taux de variation de pression de pneumatique à l'intérieur de la période courante = (la pression de pneumatique à l'intérieur de la période courante - la pression de pneumatique à l'intérieur de la période précédente considérée)/une durée de la période considérée ; et
un module d'avertissement (33) configuré pour, s'il est détecté que le véhicule comporte un pneumatique qui présente un risque de crevaison par un corps étranger, émettre en sortie un message d'alarme.

9. Appareil (30) pour avertir d'une crevaison par un corps étranger pour un pneumatique autoréparable selon la revendication 8, dans lequel le module d'appréciation (32) est en outre configuré pour :
après qu'il a été déterminé que le taux de variation de pression de pneumatique à l'intérieur de la période courante est inférieur au taux de variation de pression de pneumatique à l'intérieur de la période précédente considérée, déterminer si une différence qui est obtenue en soustrayant le taux de variation de pression de pneumatique à l'intérieur de la période courante du taux de variation de pression de pneumatique à l'intérieur de la période précédente considérée est ou non supérieure à une différence de taux de variation prédéfinie et si oui, déterminer que le taux de variation de pression de pneumatique à l'intérieur de la période courante satisfait la règle prédéterminée.

10. Appareil (30) pour avertir d'une crevaison par un corps étranger pour un pneumatique autoréparable selon la revendication 8 ou 9, dans lequel le module d'appréciation (32) est configuré pour :
pour chacun des pneumatiques du véhicule, si le résultat de comparaison de pression de pneumatique du pneumatique satisfait la première condition prédéfinie et que le résultat de comparaison de pression de pneumatique d'au moins l'un d'une pluralité de pneumatiques restants du véhicule autre que ce pneumatique ne satisfait pas la première condition prédéfinie, déterminer que le pneumatique présente un risque de crevaison par un corps étranger.

11. Appareil (30) pour avertir d'une crevaison par un corps étranger pour un pneumatique autoréparable selon la revendication 8, dans lequel le module d'avertissement (33) est configuré pour :
s'il est détecté que le véhicule comporte un pneumatique qui présente un risque de crevaison par un corps étranger, envoyer un signal d'alarme de pression de pneumatique à un tableau de bord et/ou envoyer une position du pneumatique qui présente un risque de crevaison par un corps étranger à un dispositif de rapport vocal, dans lequel le signal d'alarme de pression de pneumatique a pour objet de demander en instruction au tableau de bord de commander un voyant lumineux d'alarme de pression de pneumatique pour qu'il clignote ; et la position du pneumatique qui présente un risque de crevaison par un corps étranger a pour objet de demander en instruction au dispositif de rapport vocal de rapporter la position du pneumatique qui présente un risque de crevaison par un corps étranger.

12. Appareil (30) pour avertir d'une crevaison par un corps étranger pour un pneumatique autoréparable selon la revendication 8, dans lequel le module d'acquisition (31) est configuré pour :
recevoir les résultats de comparaison de pression de pneumatique des pneumatiques correspondants qui sont envoyés par des contrôleurs de pression de pneumatique des pneumatiques, dans lequel chacun des résultats de comparaison de pression de pneumatique est obtenu en, au moyen de l'instance correspondante des contrôleurs de pression de pneumatique, obtenant les pressions de pneumatique à l'intérieur de périodes de l'instance correspondante des pneumatiques en utilisant un capteur de pression de pneumatique correspondant, et prétraiter les pressions de pneumatique à l'intérieur des périodes du pneumatique correspondant.

13. Véhicule, dans lequel le véhicule comprend l'appareil selon l'une quelconque des revendications 8 à 12.
